# EUROPEAN PATENT APPLICATION

(11) **EP 2 731 028 A2**
(43) Date of publication of application: **14.05.2014**
(21) Application number: 13178470.4
(22) Date of filing: 30.07.2013
(51) Int. Cl.: G06F 17/30

(54) **Mobile terminal and control method thereof**

(30) Priority: 13.11.2012 KR 20120128354
(71) Applicant: LG Electronics, Inc., Seoul, 150-721 (KR)
(72) Inventor: Kim, Jonghwan, SEOUL (KR); Kim, Minkyeong, SEOUL (KR); Shin, Kyungjin, SEOUL (KR)
(74) Representative: Cabinet Plasseraud

(57) **Abstract**

The present disclosure relates to a mobile terminal having a voice recognition function. A mobile terminal according to an embodiment of the present disclosure may include a microphone configured to receive a user's voice; a user input unit configured to sense a user's input; a controller configured to start a first operation in response to the user's input, and execute a voice recognition mode prior to completing the first operation, and recognize voice received through the microphone during the execution of the voice recognition mode to generate recognition result information, and execute a second operation based on the recognition result information; a display unit configured to display a loading screen image until at least one of the first and the second operation is completed, and display a second execution screen image based on the second operation more preferentially than a first execution screen image based on the execution result of the first operation when the second operation is completed.

## Description

### BACKGROUND

The present disclosure relates to a mobile terminal, and more particularly, to a mobile terminal having a voice recognition function and a control method thereof.

Terminals can be classified into mobile or portable terminals and a stationary terminals based on its mobility. Furthermore, the mobile terminals can be further classified into handheld terminals and vehicle mount terminals based on whether or not it can be directly carried by a user.

As it becomes multifunctional, for example, such a terminal is allowed to capture still images or moving images, play music or video files, play games, receive broadcast and the like, so as to be implemented as an integrated multimedia player. Moreover, the improvement of structural or software elements of the terminal may be taken into consideration to support and enhance the functions of the terminal.

As an example of the improvement, a voice recognition function can be carried out using various algorithms in the mobile terminal. Data acquired by the voice recognition function may be used as a control command.

### SUMMARY

An objective of the present disclosure is to provide a mobile terminal for processing at least part of a second operation using a loading time during which a first operation is processed.

A mobile terminal according to an embodiment of the present disclosure may comprise a microphone configured to receive a user's voice; a user input unit configured to sense a user's input; a controller configured to start a first operation in response to the user's input, and execute a voice recognition mode prior to completing the first operation, and recognize voice received through the microphone during the execution of the voice recognition mode to generate recognition result information, and execute a second operation based on the recognition result information.

According to an embodiment,, the mobile terminal may further comprise a display unit configured to display a loading screen image until at least one of the first and the second operation is completed, and when the second operation is completed, display a second execution screen image based on the second operation and otherwise display a first execution screen image based on the execution result of the first operation.

According to an embodiment, the controller may maintain the voice recognition mode for a predetermined period of time subsequent to completing the first operation.

Furthermore, the controller may stop the execution of the voice recognition mode in response to the termination of the voice reception and when the voice reception continues to be carried out at a time point at which the predetermined period of time has passed.

According to an embodiment, when an application having a search function is carried out as the first operation, and a keyword or a keyword and a command for search is recognized as the recognition result information, the controller may perform a search using the keyword as the second operation. Furthermore, the second execution screen image may include search result information based on the search using the keyword.

According to an embodiment, when an application having a plurality of modes is carried out as the first operation, and when a keyword associated with mode selection is recognized as the recognition result information, the controller may execute a mode corresponding to the keyword among the plurality of modes as the second operation.

According to an embodiment, the controller may control the display unit to display at least one recommended word on the loading screen image during the execution of the voice recognition mode.

According to an embodiment, the mobile terminal may further include a memory configured to store unidentified event information. Furthermore, the controller may generate the at least one recommended word using the unidentified event information. Furthermore, the controller may generate the at least one recommended word based on at least one of the current location and current time of the terminal body.

According to an embodiment, when a plurality of operations associated with the recognition result information are detected, the controller may control the display unit to display a menu list for selecting one of the plurality of operations on the loading screen image.

A control method of a mobile terminal according to an embodiment of the present disclosure may include starting a first operation in response to a sensed user's input; executing a voice recognition mode prior to completing the first operation; recognizing a user's voice received through a microphone during the execution of the voice recognition mode to generate recognition result information; executing a second operation based on the recognition result information.

According to an embodiment, the control method may further include displaying a loading screen image until at least one of the first and the second operation is completed; and when the second operation is completed displaying a second execution screen image based on the second operation and otherwise a first execution screen image based on the execution result of the first operation.

According to an embodiment, the control method may further include maintaining the voice recognition mode for a predetermined period of time subsequent to completing the first operation.

Furthermore, the control method may further include stopping the execution of the voice recognition mode in response to the termination of the voice reception and when the voice reception continues to be carried out at a time point at which the predetermined period of time has passed.

According to an embodiment, when an application having a search function is carried out as the first operation, and when a keyword or a keyword and command for search is recognized as the recognition result information during the process of executing the second operation, a search using the keyword may be carried out as the second operation. Furthermore, during the process of displaying the second execution screen image, the second execution screen image may include search result information based on the search using the keyword. Furthermore, when an application having a plurality of modes is carried out as the first operation, and a keyword and command for mode selection is recognized as the recognition result information during the process of executing the second operation, a mode corresponding to the keyword among the plurality of modes may be carried out as the second operation.

According to an embodiment, during the process of displaying the loading screen image, at least one recommended word may be displayed during the execution of the voice recognition mode.

According to an embodiment, the control method may further include storing unidentified event information; and generating the at least one recommended word using the unidentified event information. Furthermore, the control method may further include generating the at least one recommended word based on at least one of the current location and current time of the terminal body.

According to an embodiment, when a plurality of operations associated with the recognition result information are detected during the process of displaying the loading screen image, a menu list for selecting one of the plurality of operations may be displayed.

Another aspect relates to a computer program product comprising a computer readable medium, having thereon a computer program comprising program instructions. The computer program is loadable into a data-processing unit and adapted to cause the data-processing unit to carry out the method described above when the computer program is run by the data-processing unit.

All the above disclosures are applicable to the below embodiments.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal associated with the present disclosure;
FIGS. 2A and 2B are perspective views illustrating an external appearance of the mobile terminal associated with the present disclosure;
FIG. 3 is a flow chart for explaining a control method of a mobile terminal according to an embodiment of the present disclosure;
FIGS. 4 through 12 are conceptual views illustrating an operation example regarding the mobile terminal to which the control method of FIG. 3 is applied; and
FIGS. 13 and 14 are conceptual views illustrating a loading screen image according to an embodiment of the present disclosure.

### DETAILED DESCRIPTION

Hereinafter, preferred embodiments of the present invention will be described in detail with reference to the accompanying drawings to such an extent that the present invention can be easily embodied by a person having ordinary skill in the art to which the present invention pertains. However, the present invention may be implemented in various different forms, and therefore, the present invention is not limited to the illustrated embodiments. In order to clearly describe the present invention, parts not related to the description are omitted, and like reference numerals designate like constituent elements throughout the specification.

A mobile terminal disclosed herein may include a portable phone, a smart phone, a laptop computer, a digital broadcast mobile device, a personal digital assistant (PDA), a portable multimedia player (PMP), a navigator, and the like. However, it would be easily understood by those skilled in the art that a configuration according to the following description may be applicable to a stationary terminal such as a digital TV, a desktop computer, and the like, excluding constituent elements particularly configured for mobile purposes.

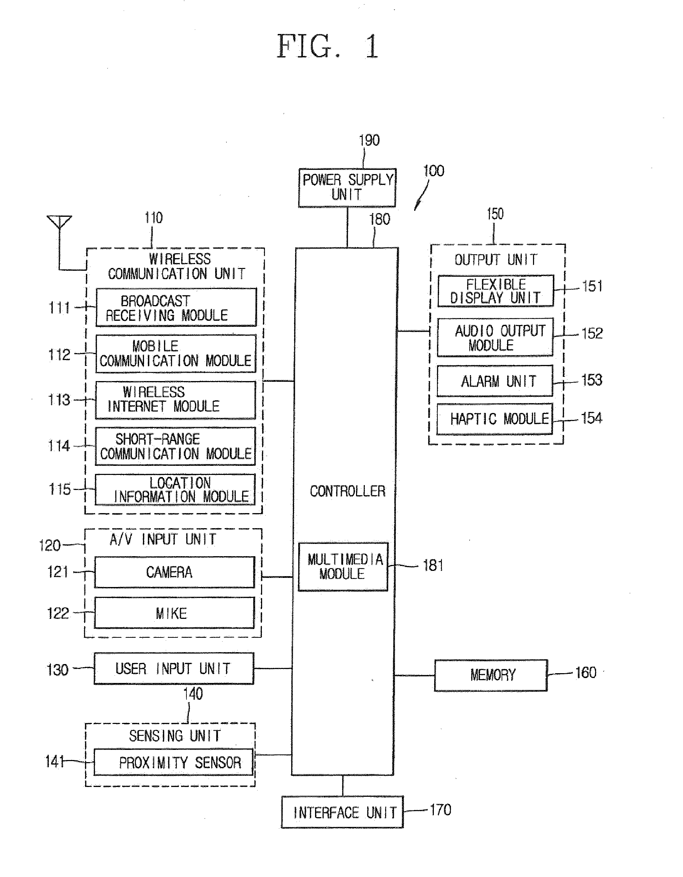

FIG. 1 is a block diagram illustrating a mobile terminal 100 associated with the present invention.

Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile communication terminal may be implemented with greater or less number of elements than those illustrated elements.

Hereinafter, the constituent elements 110-190 of the mobile terminal 100 will be described in sequence.

The wireless communication unit 110 may include one or more elements allowing radio communication between the mobile terminal 100 and a wireless communication system, or allowing radio communication between the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel. The broadcast associated information may mean information regarding a broadcast channel, a broadcast program, a broadcast service provider, and the like. The broadcast associated information may also be provided through a mobile communication network. In this case, the broadcast associated information may be received by the mobile communication module 112. The broadcast signal and broadcast-associated information received through the broadcast receiving module 111 may be stored in the memory 160.

The mobile communication module 112 transmits and/or receives a radio signal to and/or from at least one of a base station, an external terminal and a server over a mobile communication network. The radio signal may include a voice call signal, a video call signal or various types of data according to text and/or multimedia message transmission and reception.

The wireless Internet module 113 as a module for supporting wireless Internet access may be built-in or externally installed to the mobile terminal 100. A variety of wireless Internet access techniques may be used, such as WLAN (Wireless LAN), Wi-Fi, Wibro (Wireless Broadband), Wimax (World Interoperability for Microwave Access), HSDPA (High Speed Downlink Packet Access), and the like.

The short-range communication module 114 refers to a module for supporting a short-range communication. A variety of short-range communication technologies may be used, such as Bluetooth, Radio Frequency IDentification (RFID), Infrared Data Association (IrDA), Ultra WideBand (UWB), ZigBee, and the like.

The location information module 115 is a module for acquiring a location of the mobile terminal 100, and there is a GPS module as a representative example.

Subsequently, referring to FIG. 1, the A/V(audio/video) input unit 120 receives an audio or video signal, and the A/V (audio/video) input unit 120 may include a camera 121, a microphone 122, and the like. The camera 121 processes an image frame, such as still or moving images, obtained by an image sensor in a video phone call or image capturing mode. The processed image frame may be displayed on a display unit 151. The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated during the process of receiving the external audio signal.

The user input unit 130 may generate input data to control an operation of the mobile terminal 100. The user input unit 130 may be configured with a keypad, a dome switch, a touch pad (pressure/capacitance), a jog wheel, a jog switch, and the like.

The sensing unit 140 detects presence or absence of the user's contact, and a current status of the mobile terminal 100 such as an opened or closed configuration, a location of the mobile terminal 100, an orientation of the mobile terminal 100, an acceleration or deceleration of the mobile terminal 100, and the like, and generates a sensing signal for controlling the operation of the mobile terminal 100. For example, when the mobile terminal 100 is a slide phone type, the sensing unit 140 may sense an opened or closed configuration of the slide phone. Furthermore, the sensing unit 140 may sense whether or not power is supplied from the power supply unit 190, or whether or not an external device is coupled to the interface unit 170.

The sensing unit 140 may include a proximity sensor 141. Furthermore, the sensing unit 140 may include a touch sensor (not shown) for sensing a touch operation with respect to the display unit 151.

The touch sensor may be implemented as a touch film, a touch sheet, a touch pad, and the like. The touch sensor may be configured to convert changes of a pressure applied to a specific part of the display unit 151, or a capacitance generated from a specific part of the display unit 151, into electric input signals. The touch sensor may be configured to sense not only a touched position and a touched area, but also a touch pressure.

When the touch sensor and display unit 151 forms an interlayer structure, the display unit 151 may be used as an input device rather than an output device. The display unit 151 may be referred to as a "touch screen".

When there is a touch input through the touch screen, the corresponding signals may be transmitted to a touch controller (not shown). The touch controller processes signals transferred from the touch sensor, and then transmits data corresponding to the processed signals to the controller 180. Accordingly, the controller 180 may sense which region of the display unit 151 has been touched.

When the touch screen is a capacitance type, the proximity of a sensing object may be detected by changes of an electromagnetic field according to the proximity of a sensing object. The touch screen may be categorized into a proximity sensor 141.

The proximity sensor 141 refers to a sensor for detecting the presence or absence of a sensing object using an electromagnetic field or infrared rays without a mechanical contact. The proximity sensor 141 has a longer lifespan and more enhanced utility than a contact sensor. The proximity sensor 141 may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like.

Hereinafter, for the sake of convenience of brief explanation, a behavior of closely approaching the touch screen without contact will be referred to as "proximity touch", whereas a behavior that the pointer substantially comes in contact with the touch screen will be referred to as "contact touch".

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The output unit 150 may generate an output related to visual, auditory, tactile senses. The output unit 150 may include a display unit 151, an audio output module 153, an alarm unit 154, a haptic module 155, and the like.

The display unit 151 may display (output) information processed in the mobile terminal 100. For example, when the mobile terminal 100 is operated in a phone call mode, the display unit 151 may display a user interface (UI) or graphic user interface (GUI) related to a phone call. When the mobile terminal 100 is operated in a video call mode or image capturing mode, the display unit 151 may display a captured image, a received image, UI, GUI, or the like.

The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

At least one of those displays (or display devices) included in the display unit 151 may be configured with a transparent or optical transparent type to allow the user to view the outside therethrough. It may be referred to as a transparent display. A representative example of the transparent display may be a transparent OLED (TOLED), and the like. Under this configuration, the user can view an object positioned at a rear side of the mobile device body through a region occupied by the display unit 151 of the mobile device body.

There may exist two or more display units 151 according to the implementation of the mobile terminal 100. For example, a plurality of the display units 151 may be placed on one surface in a separate or integrated manner, or may be place on different surfaces, respectively.

The audio output module 152 may output audio data received from the wireless communication unit 110 or stored in the memory 160, in a call-receiving mode, a call-placing mode, a recording mode, a voice selection mode, a broadcast reception mode, and the like. The audio output module 152 may output an audio signal related to a function carried out in the mobile terminal 100 (for example, sound alarming a call received or a message received, and the like). The audio output module 152 may include a receiver, a speaker, a buzzer, and the like.

The alarm unit 153 outputs signals notifying the occurrence of an event from the mobile terminal 100. The examples of an event occurring from the mobile terminal 100 may include a call received, a message received, a key signal input, a touch input, and the like. The alarm unit 153 may output not only video or audio signals, but also other types of signals such as signals for notifying the occurrence of an event in a vibration manner. Since the video or audio signals may be also output through the display unit 151 or the audio output unit 152, the display unit 151 and the audio output module 152 may be categorized into part of the alarm unit 153.

The haptic module 154 generates various tactile effects that can be felt by the user. A representative example of the tactile effects generated by the haptic module 154 may include vibration. Vibration generated by the haptic module 154 may have a controllable intensity, a controllable pattern, and the like. For example, different vibrations may be output in a synthesized manner or in a sequential manner.

The haptic module 154 may generate various tactile effects, including not only vibration, but also arrangement of pins vertically moved with respect to a skin surface being touched, air injection force or air suction force through an injection port or suction port, touch by a skin surface, contact with an electrode, effects by stimulus such as an electrostatic force, reproduction of cold or hot feeling using a heat absorbing device or heat emitting device, and the like.

The haptic module 154 may be configured to transmit tactile effects through the user's direct contact, or the user's muscular sense using a finger or a hand. Two or more haptic modules 154 may be provided according to the configuration of the mobile terminal 100.

The memory 160 may store a program for operating the controller 180, or temporarily store input/output data (for example, phonebooks, messages, still images, moving images, and the like). The memory 160 may store data related to various patterns of vibrations and sounds outputted when performing a touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the portable terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (1/0) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the mobile terminal 100 via a port.

The interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing related to telephony calls, data communications, video calls, and the like. The controller 180 may include a multimedia module 181 which provides multimedia playback. The multimedia module 181 may be configured as part of the controller 180 or as a separate component. The controller 180 can perform a pattern recognition processing so as to recognize a handwriting or drawing input on the touch screen as text or image.

The power supply unit 190 may receive external or internal power to provide power required by various components under the control of the controller 180.

Various embodiments described herein may be implemented in a computer or similar device readable medium using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units designed to perform the functions described herein. In some cases, such embodiments may be implemented in the controller 180 itself.

For software implementation, the embodiments such as procedures or functions may be implemented together with separate software modules that allow performing of at least one function or operation. Software codes can be implemented by a software application written in any suitable programming language. The software codes may be stored in the memory 160 and executed by the controller 180.

Hereinafter, the method of processing a user input to the mobile terminal 100 will be described.

The user input unit 130 is manipulated to receive a command for controlling the operation of the mobile terminal 100, and may include a plurality of manipulation units. The manipulation units may be commonly designated as a manipulating portion, and any method may be employed if it is a tactile manner allowing the user to perform manipulation with a tactile feeling.

Various kinds of visual information may be displayed on the display unit 151. The visual information may be displayed in the form of a character, a numeral, a symbol, a graphic, an icon, and the like. For an input of the visual information, at least one of a character, a numeral, a symbol, a graphic, and an icon may be displayed with a predetermined arrangement so as to be implemented in the form of a keypad. Such a keypad may be referred to as a so-called "soft key."

The display unit 151 may operate on an entire region or operate by dividing into a plurality of regions. In case of the latter, the plurality of regions may be configured to operate in an associative way. For example, an output window and an input window may be displayed on the upper and lower portions of the display unit 151, respectively. The output window and the input window may be regions allocated to output or input information, respectively. A soft key on which numerals for inputting a phone number or the like are displayed is outputted on the input window. When the soft key is touched, a numeral corresponding to the touched soft key is displayed on the output window. When the first manipulating unit is manipulated, a phone call connection for the phone number displayed on the output window will be attempted or a text displayed on the output window will be entered to the application.

The display unit 151 or touch pad may be configured to sense a touch scroll. The user may move an object displayed on the display unit 151, for example, a cursor or pointer placed on an icon or the like, by scrolling the display unit 151 or touch pad. Moreover, when a finger is moved on the display unit 151 or touch pad, a path being moved by the finger may be visually displayed on the display unit 151. It may be useful to edit an image displayed on the display unit 151.

In order to cope with a case where the display unit 151 and touch pad are touched together within a predetermined period of time, one function of the terminal 100 may be implemented. For the case of being touched together, there is a case when the user clamps a body of the mobile terminal 100 using his or her thumb and forefinger. For one of the above functions implemented in the mobile terminal 100, for example, there may be an activation or de-activation for the display unit 151 or touch pad.

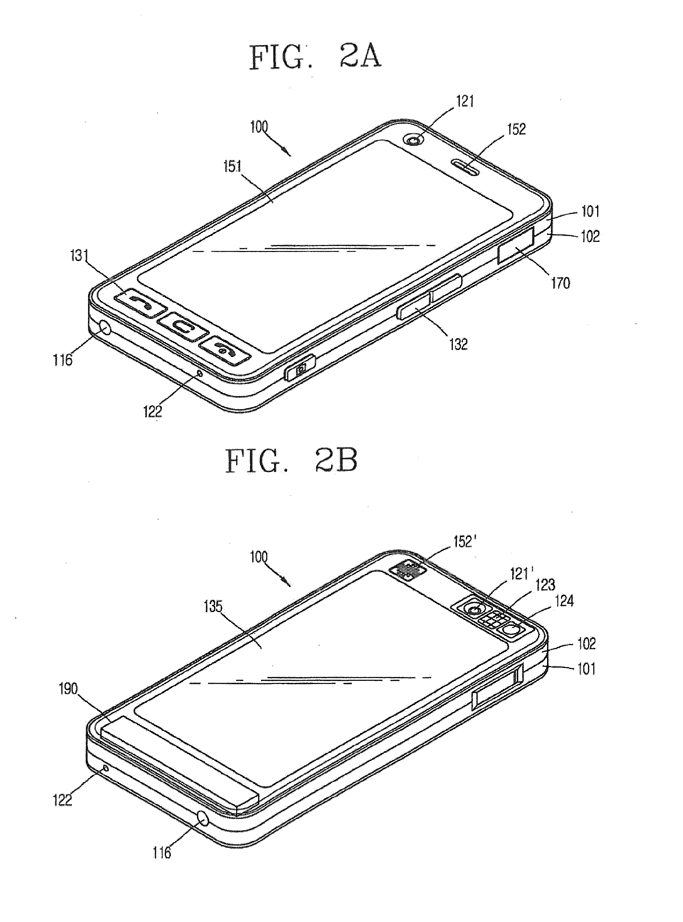

FIGS. 2A and 2B are perspective views illustrating the external appearance of a mobile terminal 100 related to the present disclosure. FIG. 2A is a front and a side view illustrating the mobile terminal 100, and FIG. 2B is a rear and the other side view illustrating the mobile terminal 100.

Referring to FIG. 2A, the mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

The terminal body includes a case (casing, housing, cover, etc.) forming an appearance of the terminal. In this embodiment, the case may be divided into a front case 101 and a rear case 102. Various electronic components may be integrated in a space formed between the front case 101 and the rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (refer to FIG. 1), a microphone 122, an interface 170, and the like may be arranged on the terminal body, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102.

The user input unit 130 is manipulated to receive a command for controlling the operation of the portable terminal 100. The user input unit 130 may include a plurality of manipulation units 131, 132.

The first and the second manipulation unit 131, 132 may receive various commands. For example, the first manipulation unit 131 may be used to receive a command, such as start, end, scroll, or the like. The second manipulation unit 132 may be used to receive a command, such as controlling a volume level being outputted from the audio output unit 152, or switching it into a touch recognition mode of the display unit 151.

Referring to FIG. 2B, a camera 121' may be additionally mounted on a rear surface of the terminal body, namely, the rear case 102. The rear camera 121' has an image capturing direction, which is substantially opposite to the direction of the front camera 121 (refer to FIG. 2A), and may have different number of pixels from those of the front camera 121.

For example, that the front camera 121 may be configured to have a relatively small number of pixels, and the rear camera 121' may be configured to have a relatively large number of pixels. Accordingly, in case where the front camera 121 is used for video communication, it may be possible to reduce the size of transmission data when the user captures his or her own face and sends it to the other party in real time. On the other hand, the rear camera 121' may be used for the purpose of storing high quality images.

On the other hand, the cameras 121, 121' may be provided in the terminal body in a rotatable and popupable manner.

Furthermore, a flash 123 and a mirror 124 may be additionally disposed adjacent to the rear camera 121'. The flash 123 illuminates light toward an object when capturing the object with the camera 121'. The mirror 124 allows the user to look at his or her own face, or the like, in a reflected way when capturing himself or herself (in a self-portrait mode) by using the rear camera 121'.

Furthermore, a rear audio output unit 152' may be additionally disposed on a rear surface of the terminal body. The rear audio output unit 152' together with the front audio output unit 152 (refer to FIG. 2A) can implement a stereo function, and it may be also used to implement a speaker phone mode during a phone call.

Furthermore, an antenna 116 for receiving broadcast signals may be additionally disposed on a lateral surface of the terminal body. The antenna 116 constituting part of a broadcast receiving module 111 (refer to FIG. 1) may be provided so as to be pulled out from the terminal body.

Furthermore, a power supply unit 190 for supplying power to the portable terminal 100 may be mounted on the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be also configured with an optical transmission type, similarly to the display unit 151 (refer to FIG. 2A). Alternatively, a rear display unit for displaying visual information may be additionally mounted on the touch pad 135. At this time, information displayed on the both surfaces of the front display unit 151 and rear display unit may be controlled by the touch pad 135.

The touch pad 135 may be operated in conjunction with the display unit 151 of the front case 101. The touch pad 135 may be disposed in parallel at a rear side of the display unit 151. The touch pad 135 may have the same size as or a smaller size than the display unit 151.

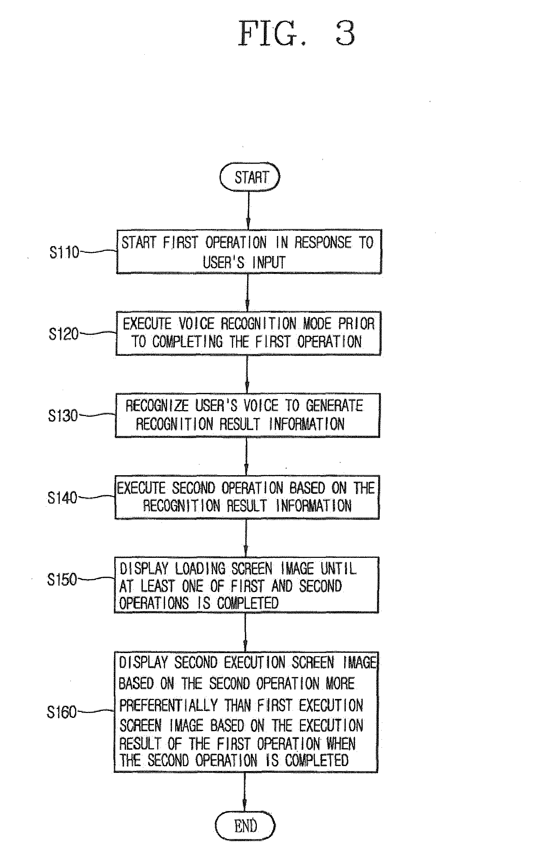

FIG. 3 is a flow chart for explaining a control method of a mobile terminal according to an embodiment of the present disclosure. Referring to FIG. 3, the process of starting a first operation in response to the user's input is carried out. As an example of the first operation, there are website access, reproduction of media contents, execution of various applications, and the like.

This embodiment may be implemented in a mobile terminal which comprises a microphone configured to receive a user's voice; a user input unit configured to sense a user's input; a controller configured to start a first operation in response to the user's input, and execute a voice recognition mode prior to completing the first operation, and recognize voice received through the microphone during the execution of the voice recognition mode to generate recognition result information, and execute a second operation based on the recognition result information.

More specifically, an application may be executed in response to a touch input applied to the display unit 151. In order to complete the execution of an application, a series of data processing is required, and due to this, a waiting time occurs from a time point at which a specific operation is requested to a time point at which the specific operation is completed. Here, the operation state of the mobile terminal 100 during the waiting time may be referred to as a loading state. Furthermore, information acquired by the completion of the requested operation may be referred to as loading result information. For example, when the execution of an application is completed, a predetermined initial screen image may be displayed as loading result information (loading result image).

Next, the process (S120) of executing a voice recognition mode prior to completing the first operation is carried out. The voice recognition mode may be carried out at a specific time point during a time interval from a time point at which the first operation is started to a time point at which the first operation is completed. The activation of the voice recognition mode may be controlled in various ways. For example, subsequent to completing the first operation, the voice recognition mode may be maintained for a predetermined period of time. Furthermore, when voice reception continues to be carried out at a time point at which the predetermined period of time has passed, the voice recognition mode may be released in response to the termination of voice reception.

The process (S130) of recognizing the user's voice received through a microphone during the execution of the voice recognition mode to generate recognition result information is carried out. To this end, a voice recognition engine may be driven.

The voice recognition engine analyzes the meaning and context of the received (input) voice using a voice recognition algorithm. For example, the voice recognition engine may convert voice into data in the form of text using a speech-to-text (STT) algorithm to store it in the database. The user's voice may be converted into a plurality of data by the voice recognition algorithm. In this case, the voice recognition engine may determine recognition rates for the plurality of data, and select data having the highest recognition rate from the plurality of data.

Next, the process (S140) of executing a second operation based on the recognition result information is carried out. For example, when an application having a search function is carried out as the first operation, and a keyword and command for search is recognized as the recognition result information, a search using the recognized keyword as the second operation may be carried out. Furthermore, when an application having a plurality of modes is carried out as the first operation, and a keyword and command for mode selection is recognized as the recognition result information, a mode corresponding to the keyword among the plurality of modes may be carried out as the second operation.

Furthermore, the process (S150) of displaying a loading screen image prior to completing at least one of the first and the second operation is carried out. The loading screen image refers to an image displayed on the display unit 151 in a loading state of the mobile terminal 100. The loading screen image may include an indicator indicating a loading state.

When the second operation is completed, the process (S160) of displaying a second execution screen image based on the second operation more preferentially than a first execution screen image based on the execution result of the first operation is carried out. For example, when a search using a keyword acquired by voice recognition is completed while accessing a website for driving a search engine, the process of displaying an initial screen image of the website will be omitted, and a screen image containing a search result for the keyword will be displayed.

As described above, according to the mobile terminal 100 in accordance with the present disclosure, a second operation corresponding to a voice recognized based on the voice recognition function while processing the first operation may be simultaneously processed, thereby allowing the user to effectively use a waiting time due to the loading state of the mobile terminal 100.

On the other hand, though not shown in the drawing, the user may select how to use voice received during the loading state of the mobile terminal 100. To this end, the controller 180 may display a setting screen for voice received during the loading state of the mobile terminal 100 on the display unit 151. The user may select whether to use the received voice as a keyword or use it as an execution command of the application on the setting screen. Furthermore, the user can select whether or not to execute a voice recognition function, and select whether or not to receive a recommended word when there is no recognition result information.

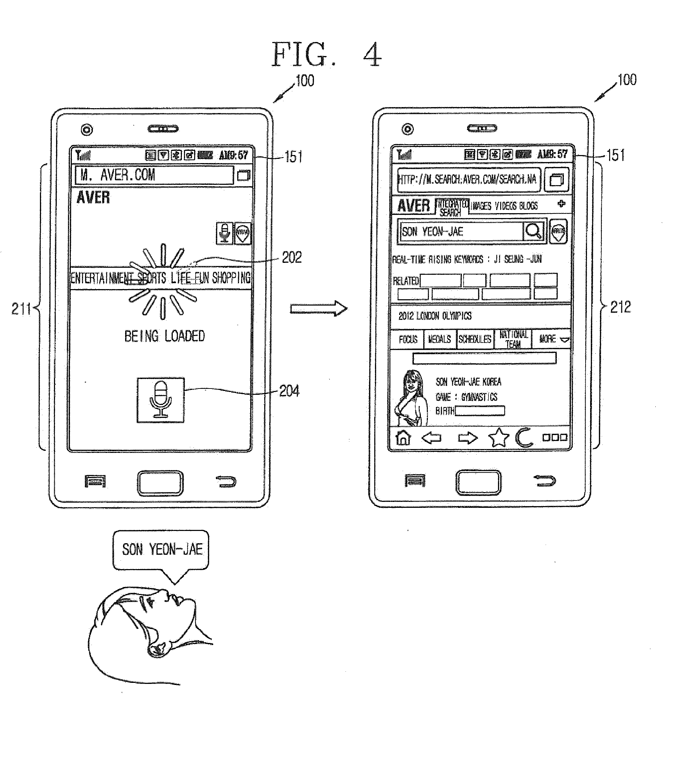

FIGS. 4 through 12 are conceptual views illustrating an operation example regarding the mobile terminal to which the control method of FIG. 3 is applied.

These embodiments may be implemented in a mobile terminal which comprises a microphone configured to receive a user's voice; a user input unit configured to sense a user's input; a controller configured to start a first operation in response to the user's input, and execute a voice recognition mode prior to completing the first operation, and recognize voice received through the microphone during the execution of the voice recognition mode to generate recognition result information, and execute a second operation based on the recognition result information.

Referring to FIG. 4, an operation example regarding a search function in a website for driving a search engine (hereinafter, referred to as a "search website") is illustrated. The controller 180 may access a search website using a browser application with the first operation. The controller 180 may control the display unit 151 to display a loading screen image 211 subsequent to initiating an access to the search website. The loading screen image 211 being displayed denotes that the mobile terminal 100 is currently in a loading state due to the first operation.

Furthermore, the controller 180 may execute a voice recognition mode in the loading state. At this time, the loading screen image 211 may include at least one of a first indicator 202 indicating a loading state and a second indicator 204 indicating a voice recognition mode.

Then, the controller 180 may recognize the user's voice received through the microphone 122 (refer to FIG. 1) to generate a keyword and command for search as recognition result information. For example, a keyword such as "Son Yeon-Jae" may be recognized. In this case, the controller 180 may execute a search for "Son Yeon-Jae" as the second operation, and control the display unit 151 to display an execution screen image 212 containing the resultant search result information.

If the user's voice is not received or the second operation is not carried out due to the failure of the voice recognition, then an execution screen image provided as a basic setting when accessing the search website or executing a browser application may be displayed.

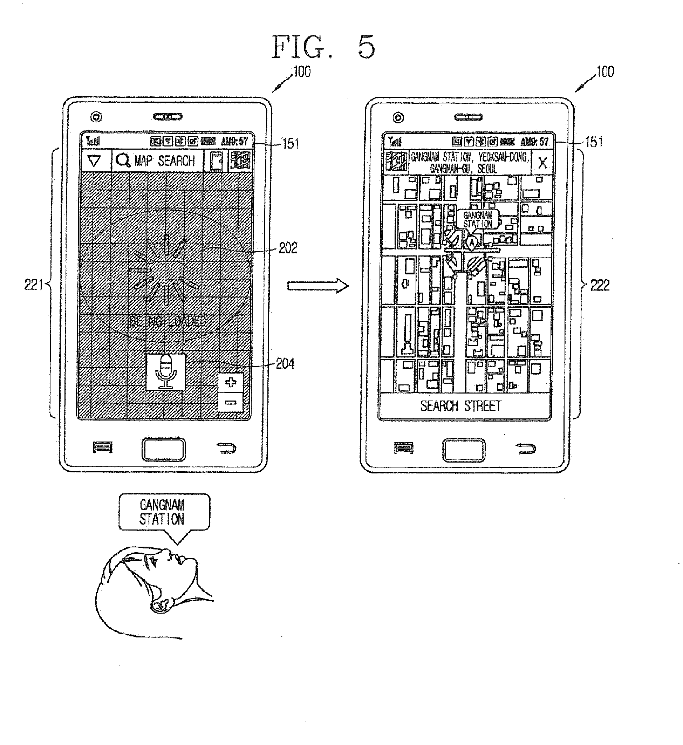

Referring to FIG. 5, an operation example regarding a regional search using a map application is illustrated. Hereinafter, the description of a configuration and function which is the same as or similar to the foregoing embodiment will be omitted. The controller 180 may execute a map application as the first operation. The controller 180 may control the display unit 151 to display a loading screen image 221 subsequent to initiating the execution of the map application.

Then, the controller 180 may recognize the user's voice in a loading state to acquire a region name as a keyword. For example, keyword "Gangnam station" may be recognized. In this case, the controller 180 may perform a location search for "Gangnam station" as the second operation, and control the display unit 151 to display an execution screen image 222 of the map application containing the location information of "Gangnam station".

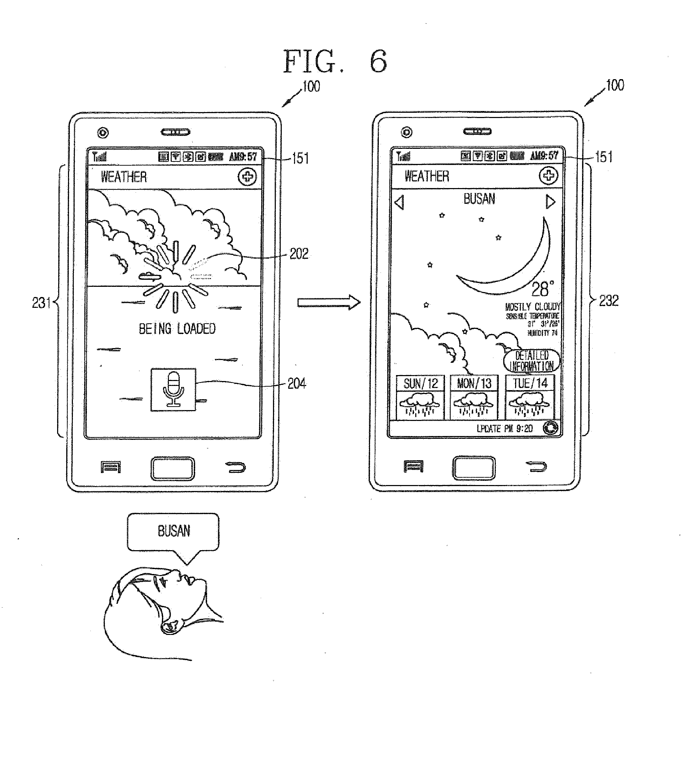

Referring to FIG. 6, an operation example regarding providing weather information for a specific region using a weather application is illustrated. The controller 180 may execute a weather application as the first operation. The controller 180 may control the display unit 151 to display a loading screen image 231 subsequent to initiating the execution of the weather application.

Then, the controller 180 may recognize the user's voice in a loading state to acquire a region name as a keyword. For example, keyword "Busan" may be recognized. In this case, the controller 180 may receive the weather information of "Busan" as the second operation, and control the display unit 151 to display an execution screen image 232 of the weather application containing "Busan".

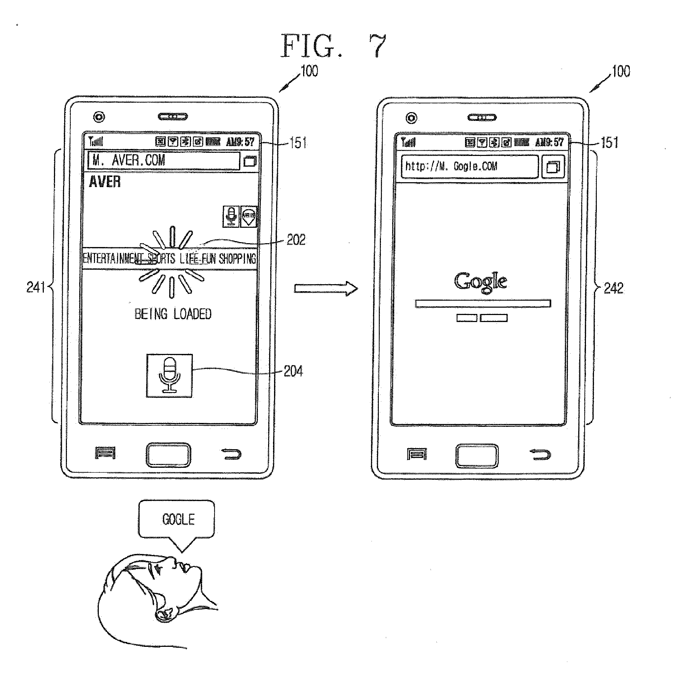

Referring to FIG. 7, an operation example regarding switching a website through a browser application is illustrated. The controller 180 may execute a browser application as the first operation, and access a first website. The controller 180 may control the display unit 151 to display a loading screen image 241 subsequent to initiating the access to the first website.

Then, the controller 180 may recognize the user's voice in a loading state to acquire the name of a second website as a keyword. For example, keyword "Gogle" may be recognized. In this case, the controller 180 may terminate the access to the first website, and access the second website using the address information of the second website "Gogle". Furthermore, the controller 180 may control the display unit 151 to display an execution screen image 242 of the browser application containing the website information provided when accessing the second website.

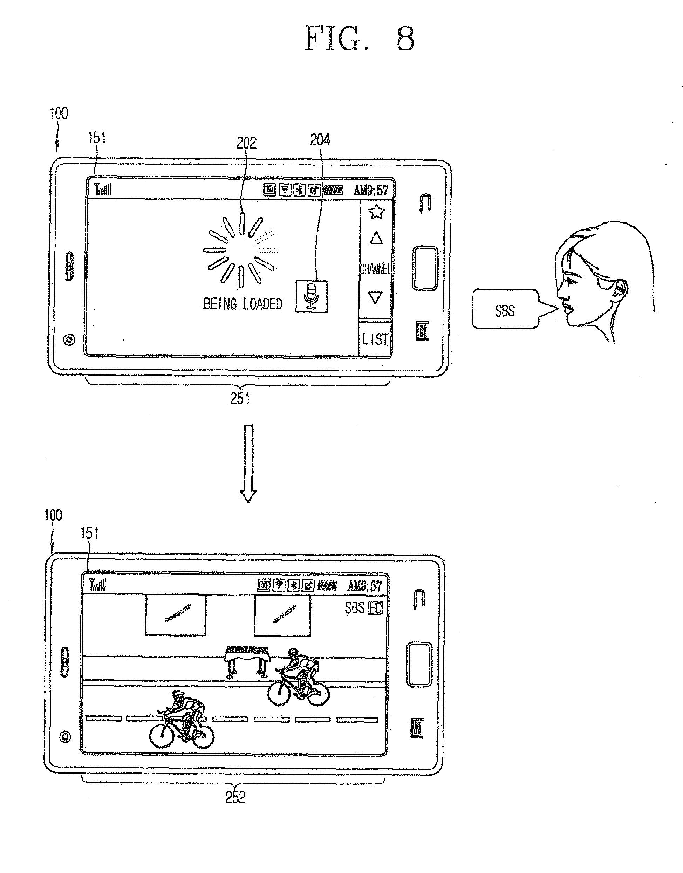

Referring to FIG. 8, an operation example regarding viewing a broadcast program is illustrated. The controller 180 may execute an application (hereinafter, referred to as a "broadcast application") for viewing a broadcast program as the first operation. The controller 180 may control the display unit 151 to display a loading screen image 251 subsequent to initiating the execution of the broadcast application.

Then, the controller 180 may recognize the user's voice in a loading state to acquire the name of a broadcast channel as a keyword. For example, keyword "SBS" may be recognized. In this case, the controller 180 may receive broadcast program contents in real time through the broadcast channel "SBS" as the second operation. Furthermore, the controller 180 may control the display unit 151 to display an execution screen image 252 of the broadcast application containing received broadcast program contents.

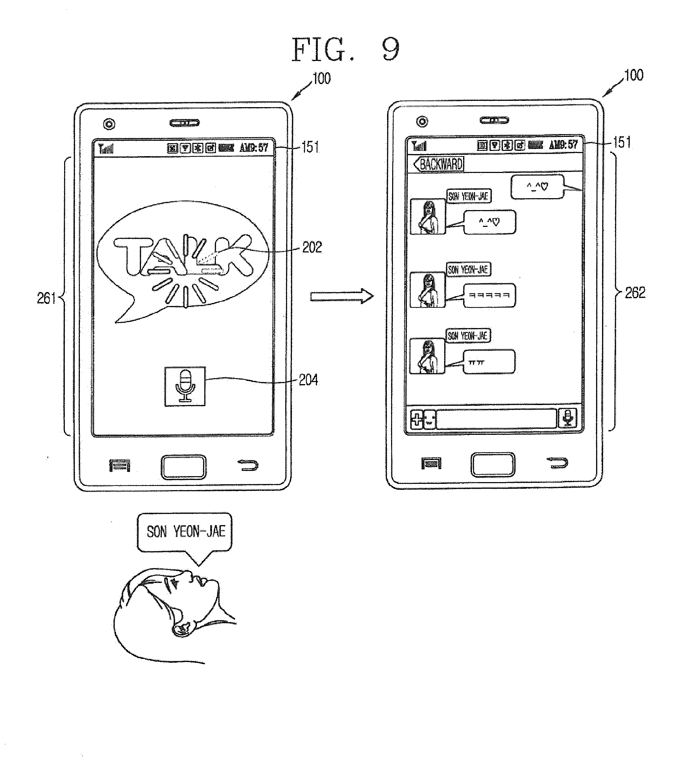

Referring to FIG. 9, an operation example regarding a chatting application is illustrated. The controller 180 may execute a chatting application as the first operation. The controller 180 may control the display unit 151 to display a loading screen image 261 subsequent to initiating the execution of the chatting application.

Then, the controller 180 may recognize the user's voice in a loading state to acquire the name of a conversation participant as a keyword. For example, keyword "Son Yeon-Jae" may be recognized. In this case, the controller 180 may control the display unit 151 to display an execution screen image 262 of the chatting application containing the conversation contents that have been conversed between the user and " Son Yeon-Jae" as the second operation. Furthermore, the controller 180 may maintain a voice recognition mode even when the loading state due to the first operation is terminated.

For example, when the user's voice is recognized to acquire the name of a conversation participant, the controller 180 may continue to execute a voice recognition mode to receive the conversation contents to be uttered by the user subsequently as voice data while displaying an execution screen image 262 of the chatting application containing the conversation contents that have been conversed between the user and " Son Yeon-Jae". In other words, the controller 180 may convert voice received from the microphone 122 (refer to FIG. 1) into data in the form of text, and display the converted data in the form of text on the execution screen image 262 of the chatting application. Then, though not shown in the drawing, the controller 180 may change the voice recognition mode to a text input mode according to the user's selection.

Though not shown in the drawing, the foregoing embodiment may be applicable to a search function having applications such as SNS, photo album, electronic commerce, contents streaming service, and the like.

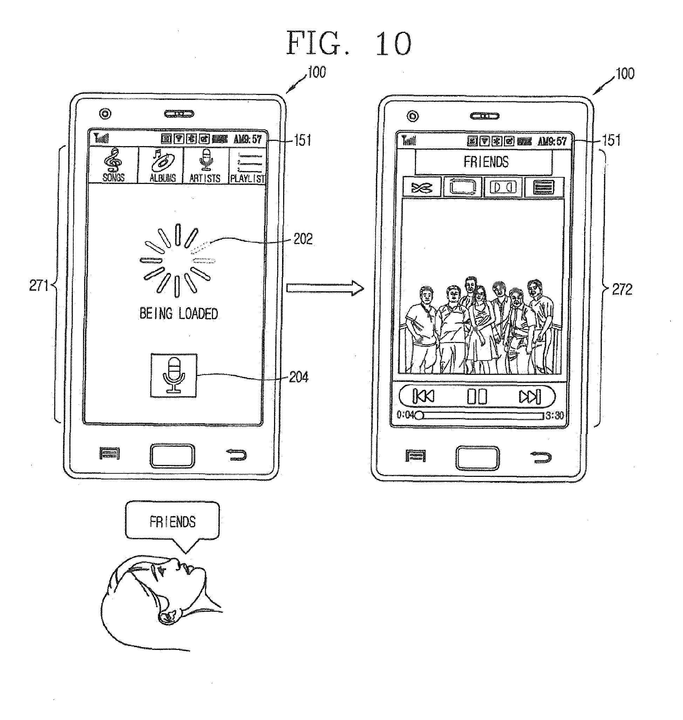

Referring to FIG. 10, an operation example regarding an application (hereinafter, referred to as a "reproduction application") for media contents reproduction is illustrated. The controller 180 may execute a reproduction application as the first operation. The controller 180 may control the display unit 151 to display a loading screen image 271 subsequent to initiating the execution of the reproduction application.

Then, the controller 180 may recognize the user's voice in a loading state to acquire the name of a media content as a keyword. For example, keyword "friends" may be recognized. In this case, the controller 180 may search media contents corresponding to the "friends" in the memory 160 (refer to FIG. 1) as the second operation to reproduce the contents. Furthermore, the controller 180 may control the display unit 151 to display an execution screen image 272 of the reproduction application containing the reproduction contents related to media contents being reproduced.

When a search for media contents corresponding to the keyword in the memory 160 is failed, the controller 180 may access an external contents providing server to search the relevant media contents. The searched media contents in this manner may be downloaded to the mobile terminal 100 or transmitted in a streaming manner according to the user's input.

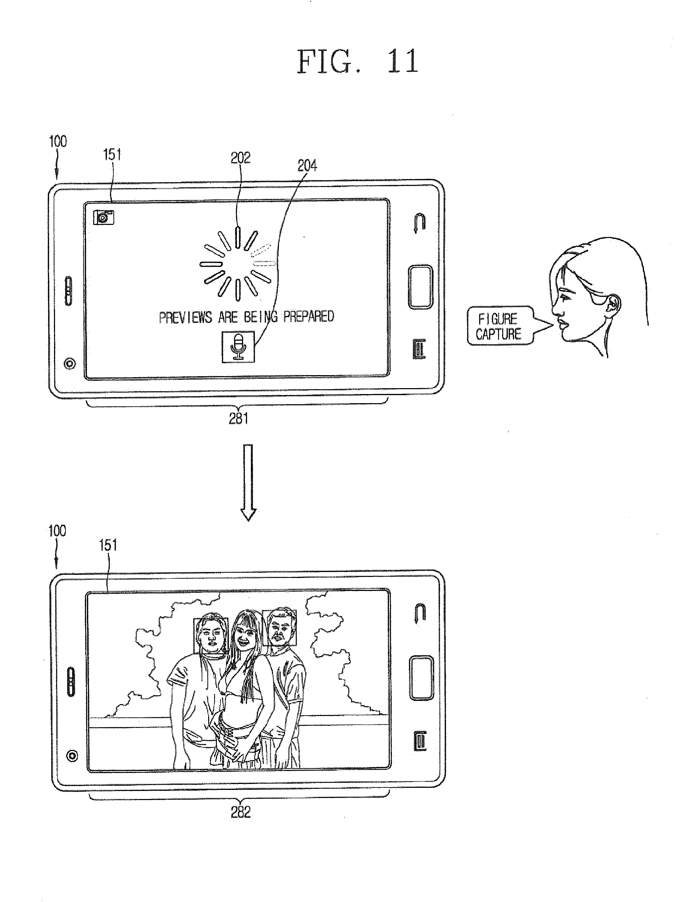

Referring to FIG. 11, an operation example regarding a capture application is illustrated. The capture application may include a plurality of modes. For example, the capture application may support various capture mode such as a figure capture mode, a proximity capture mode, a night scene capture mode, and the like.

The controller 180 may drive a camera 121 (refer to FIG. 1) as the first operation to execute a capture application. The controller 180 may control the display unit 151 to display a loading screen image 281 subsequent to initiating the execution of the capture application.

Then, the controller 180 may recognize the user's voice in a loading state to acquire mode selection information as a keyword. For example, keyword "figure capture" may be recognized. In this case, the controller 180 may select and execute a figure capture mode among a plurality of the capture modes as the second operation. Furthermore, the controller 180 may control the display unit 151 to display an execution screen image 282 of the capture application corresponding to the figure capture mode.

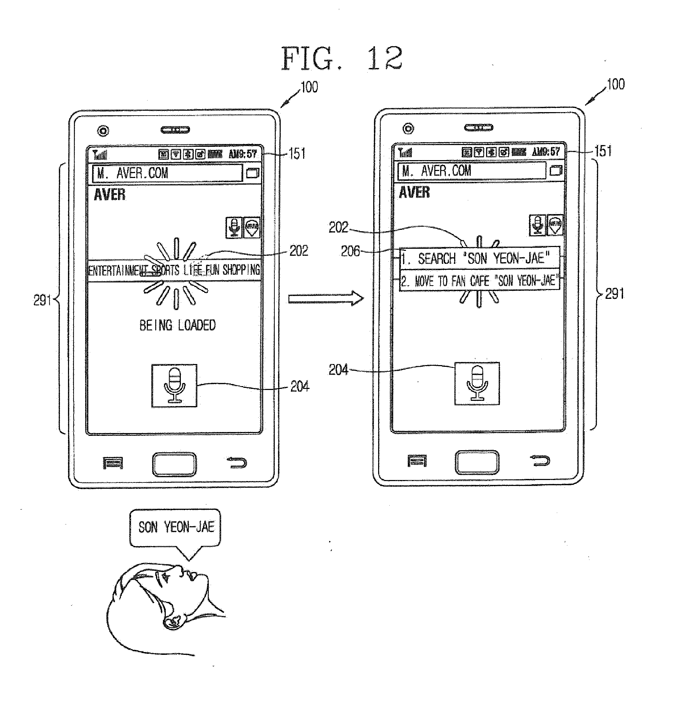

Referring to FIG. 12, an operation example regarding the detection of a plurality of operations related to recognition result information in a voice recognition mode is illustrated. When a plurality of operations related recognition result information is detected, the controller 180 may control the display unit 151 to display a menu list 206 for selecting one of the plurality of operations on the loading screen image 291.

For example, when keyword "figure capture" may be recognized as the recognition result information in a loading state due to an access to a search website, the menu list 206 indicating a plurality of operations such as a search operation for "Son Yeon-Jae", an access to an internet fan cafe of "Son Yeon-Jae", and the like may be displayed on the loading screen image 291. Here, the items of the menu list 206 may be implemented in the form of text or may be implemented in the form of thumbnail images for information to be displayed based on the execution result of the relevant operation.

The controller 180 may select and execute any one operation in response to the user's manipulation (for example, touch input) to the menu list 206. Furthermore, the controller 180 may select and execute any one operation according to the recognition result of a newly received voice.

Though not shown in the drawing, when voice recognition is failed, the controller 180 may control the display unit 151 to display a guide message for requesting a voice re-input to the user when voice recognition is failed.

For example, when there is no recognition result information, the controller 180 may display a popup window containing a guide message for requesting a guide message for requesting a voice re-input to the user on the display unit 151.

Though not shown in the drawing, when there is no voice recognition result value, the controller 180 may display related recommended words on the display unit 151. At this time, when any one of the recommended words is selected, the controller 180 may select and execute an operation related to the selected recommended word.

On the other hand, when there is no voice recognition result value, the controller 180 may display the recognized keyword on the display unit 151. At the same time, the controller 180 may display recommended words similar to the recognized keyword on the display unit 151. When any one of the recommended words is selected, the controller 180 may change the keyword to the selected recommended word, and select and execute an operation related to the selected recommended word.

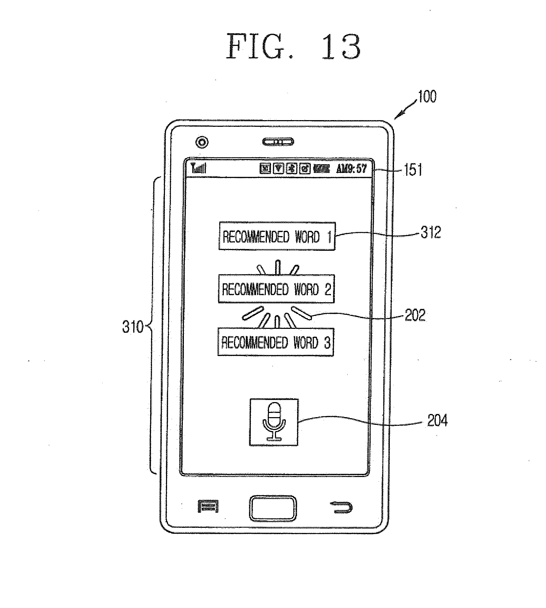

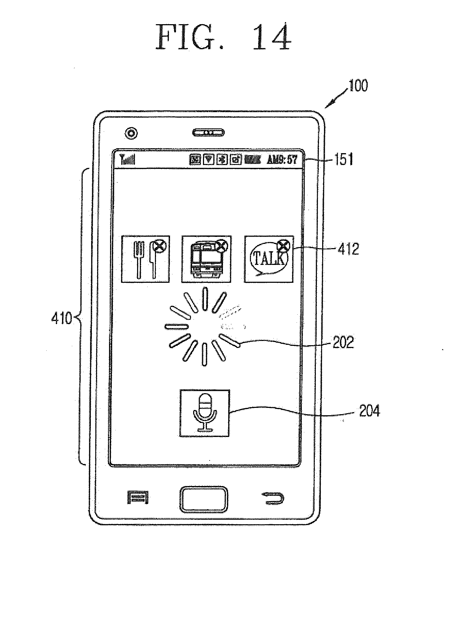

FIGS. 13 and 14 are conceptual views illustrating a loading screen image according to an embodiment of the present disclosure.

These embodiments may be implemented in a mobile terminal which comprises a microphone configured to receive a user's voice; a user input unit configured to sense a user's input; a controller configured to start a first operation in response to the user's input, and execute a voice recognition mode prior to completing the first operation, and recognize voice received through the microphone during the execution of the voice recognition mode to generate recognition result information, and execute a second operation based on the recognition result information.

Referring to FIG. 13, the controller 180 may generate at least one recommended word 312 and control the display unit 151 to display it on the loading screen image 310 during the execution of the voice recognition mode in a loading state.

More specifically, the recommended word 312 may be generated using unidentified event information stored in the memory 160. For example, when an event occurs such as a missed call, an unidentified text message, or the like, the recommended word 312 may include caller information (the name of the caller), the summary information of the message, and the like. Then, when the voice recognition result corresponds to the recommended word 312, a function related to the relevant event may be executed. For example, the voice recognition result corresponds to the name of the caller, the controller 180 may make a call to the relevant caller or control the display unit 151 to display a text message received from the relevant caller.

As described above, the recommended word 312 may be displayed on the loading screen image 310 to allow the user to pronounce the recommended word 312, thereby limiting the database for voice recognition processing. As a result, it may be possible to enhance the speediness and accuracy for voice recognition.

According to an embodiment of the present disclosure, the recommended word 312 may be generated based on at least one of the current location and current time of the terminal body. For example, the recommended word 312 may correspond to a keyword that has been used at a current location in the past. Furthermore, the recommended word 312 may correspond to a keyword that has been used at a time zone corresponding to the current time. Furthermore, the recommended word 312 may correspond to the name of an application, a function setting option, and the like that has been frequently used by the user.

Referring to FIG. 14, an operation example regarding the resource management of the mobile terminal 100 in a loading state is illustrated. The controller 180 may control the display unit 151 to display an icon 412 corresponding to an application (hereinafter, referred to as a "background application") being executed in the background on the loading screen image 410. Then, the controller 180 may terminate the execution of a background application based on the user's input (for example, touch input, voice input, etc.). Accordingly, the resources of the mobile terminal 100 may be secured to more effectively process a loading operation, and as a result, a waiting time due to the loading state may be reduced.

According to an embodiment of present disclosure, the foregoing method may be implemented as codes readable by a processor on a medium written by a program. Examples of the processor-readable media may include ROM, RAM, CD-ROM, magnetic tape, floppy disk, and optical data storage device, and the like, and also include a device implemented in the form of a carrier wave (for example, transmission via the Internet).

The configurations and methods according to the above-described embodiments will not be applicable in a limited way to the foregoing mobile terminal, and all or part of each embodiment may be selectively combined and configured to make various modifications thereto.

## Claims

1. A mobile terminal (100), comprising:
a microphone (122) configured to receive a user's voice;
a user input unit (130) configured to sense a user's input;
a controller (180) configured to:
- start (S110) a first operation in response to the user's input,
- execute (S120) a voice recognition mode prior to completing the first operation,
- recognize (S130) voice received through the microphone during the execution of the voice recognition mode to generate recognition result information, and
- execute a second operation based on the recognition result information;
wherein the first operation is different from a voice recognition mode operation.

2. The mobile terminal (100) of claim 1, wherein the controller (180) is further configured to maintain the voice recognition mode for a predetermined period of time subsequent to completing the first operation.

3. The mobile terminal (100) of claim 2, wherein the controller (180) is further configured to stop the execution of the voice recognition mode in response to the termination of the voice reception and when the voice reception continues to be carried out at a time point at which the predetermined period of time has passed.

4. The mobile terminal (100) of any of the preceding claims, wherein when an application having a search function is carried out as the first operation, and when a keyword or a keyword and a command for search is recognized as the recognition result information, the controller (180) is further configured to perform a search using the keyword as the second operation.

5. The mobile terminal (100) of claim 4, wherein the second execution screen image comprises search result information based on the search using the keyword.

6. The mobile terminal (100) of any of the preceding claims, wherein when an application having a plurality of modes is carried out as the first operation, and when a keyword associated with a mode is recognized as the recognition result information, the controller (180) is further configured to execute a mode corresponding to the keyword among the plurality of modes as the second operation.

7. The mobile terminal (100) of claim 1, wherein the mobile terminal (100) further comprises a display unit (151) configured to:
- display (S150) a loading screen image until at least one of the first and the second operation is completed, and
- when the second operation is completed, display (S160) a second execution screen image based on the second operation and otherwise display a first execution screen image based on the execution result of the first operation,

8. The mobile terminal (100) of claim 7, wherein the controller (180) is further configured to control the display unit to display at least one recommended word on the loading screen image during the execution of the voice recognition mode.

9. The mobile terminal (100) of claim 8, further comprising:
a memory (160) configured to store unidentified event information,
wherein the controller (180) is further configured to generate the at least one recommended word using the unidentified event information.

10. The mobile terminal (100) of claim 7, 8 or 9, wherein the controller (180) generates the at least one recommended word based on at least one of the current location and current time of the terminal body.

11. The mobile terminal (100) of any of the preceding claims, wherein when a plurality of operations associated with the recognition result information are detected, the controller (180) controls the display unit (151) to display a menu list for selecting one of the plurality of operations on the loading screen image.

12. A control method of a mobile terminal, the method comprising:
starting (S110) a first operation in response to a sensed user's input;
executing (S120) a voice recognition mode prior to completing the first operation;
recognizing (S130) a user's voice received through a microphone during the execution of the voice recognition mode to generate recognition result information;
executing (S140) a second operation based on the recognition result information;
wherein the first operation is different from a voice recognition mode operation.

13. The method of claim 12, further comprising:
maintaining the voice recognition mode for a predetermined period of time subsequent to completing the first operation.

14. The method of claim 13, further comprising:
stopping the execution of the voice recognition mode in response to the termination of the voice reception and when the voice reception continues to be carried out at a time point at which the predetermined period of time has passed.

15. A non-transitory computer readable storage medium, having stored thereon a computer program comprising program instructions, the computer program being loadable into a data-processing unit and adapted to cause the data-processing unit to carry out the steps of any of claims 12 to 14 when the computer program is run by the data-processing device.
